(19) Europäisches Patentamt
European Patent Office
Office européen des brevets

(11) **EP 4 614 316 A1**

(12) **EUROPEAN PATENT APPLICATION**
published in accordance with Art. 153(4) EPC

(43) Date of publication:
**10.09.2025 Bulletin 2025/37**

(21) Application number: **23915648.2**

(22) Date of filing: **16.10.2023**

(51) International Patent Classification (IPC):
*G06F 8/70* (2018.01)

(52) Cooperative Patent Classification (CPC):
**G06F 8/70**

(86) International application number:
**PCT/CN2023/124802**

(87) International publication number:
**WO 2024/148890 (18.07.2024 Gazette 2024/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.01.2023 CN 202310070418**

(71) Applicant: **Huawei Technologies Co., Ltd.
Shenzhen, Guangdong 518129 (CN)**

(72) Inventors:
• **PENG, Chao**
  **Shenzhen, Guangdong 518129 (CN)**
• **XIA, Chuangming**
  **Shenzhen, Guangdong 518129 (CN)**
• **TAN, Chenghui**
  **Shenzhen, Guangdong 518129 (CN)**

(74) Representative: **Gill Jennings & Every LLP
The Broadgate Tower
20 Primrose Street
London EC2A 2ES (GB)**

(54) **SOFTWARE REPAIR METHOD, TEMPLATE INFORMATION GENERATION METHOD, COMPUTING DEVICE AND STORAGE MEDIUM**

(57) This application relates to the field of communication technologies, and discloses a software repair method, a template information generation method, a computing device, and a storage medium. **In** this application, when an exception occurs during running of software, a terminal device sends exception information to a server. The server compares the exception information with stored exception templates in template information, to quickly find a target exception template corresponding to the exception information and a target repair policy corresponding to the target exception template, and sends the target repair policy to the terminal device, so that the terminal device can quickly perform software repair for the exception, thereby reducing manual intervention, reducing human resource consumption, and improving software repair efficiency.

FIG. 8

## Description

CROSS-REFERENCE TO RELATED APPLICATIONS

This application claims priority to Chinese Patent Application No. 202310070418.9, filed with the China National Intellectual Property Administration on January 12, 2023 and entitled "SOFTWARE REPAIR METHOD, TEMPLATE INFORMATION GENERATION METHOD, COMPUTING DEVICE, AND STORAGE MEDIUM", which is incorporated herein by reference in its entirety.

TECHNICAL FIELD

This application relates to the field of communication technologies, and in particular, to a software repair method, a template information generation method, a computing device, and a storage medium.

BACKGROUND

With the development of information technologies, the demand for software is increasing, and increasingly more exceptions occur during running of the software. The exceptions may occur due to hardware errors, input parameter errors, or programmer negligence.

For widely used software, when different users use the same software, some exceptions may occur repeatedly for many times. For the large quantity of frontline operation and maintenance personnel, each time an exception occurs, a large amount of manpower and time are required to analyze and locate a cause of the exception and repair the software, resulting in low software repair efficiency.

SUMMARY

This application provides a software repair method, a template information generation method, a computing device, and a storage medium, to reduce manual intervention, reduce human resource consumption, and improve software repair efficiency.

According to a first aspect, an embodiment of this application provides a software repair method that may be applied to a server. The software repair method may include: The server receives exception information sent by a first terminal device, where the first terminal device may be any terminal device that is connected to the server and has target software installed, and the exception information is information generated when an exception occurs during running of the target software on the first terminal device. After receiving the exception information sent by the first terminal device, the server determines, from a plurality of exception templates included in template information, a target exception template corresponding to the exception information, where a similarity between the target exception template and the exception information sent by the first terminal device is greater than a specified similarity threshold, and the template information includes one-to-one correspondences between the plurality of exception templates and a plurality of repair policies. After determining the target exception template, the server obtains, from the template information, a target repair policy corresponding to the target exception template, and sends the target repair policy to the first terminal device. The target repair policy is used by the first terminal device to repair an exception generated by the target software.

According to the software repair method provided in this embodiment of this application, when an exception occurs during running of software, a terminal device sends exception information to a server. The server compares the exception information with stored exception templates in template information, to quickly find a target exception template corresponding to the exception information and a target repair policy corresponding to the target exception template, and sends the target repair policy to the terminal device, so that the terminal device can quickly perform software repair for the exception, thereby reducing manual intervention, reducing human resource consumption, and improving software repair efficiency.

In a possible implementation, the server may determine the plurality of exception templates by using the following method: receiving a plurality of pieces of exception information sent by a plurality of terminal devices running the target software within a specified time period, and dividing the plurality of pieces of obtained exception information into a plurality of event information sets, where each of the plurality of event information sets satisfies the following condition: a similarity between every two pieces of exception information in the event information set is greater than or equal to a specified value. After obtaining the plurality of event information sets, the server determines central event information of each of the plurality of event information sets, to obtain a plurality of pieces of central event information, and generates the plurality of exception templates based on the plurality of pieces of obtained central event information.

In the foregoing implementation, during generation of the exception templates, the exception templates do not need to be manually sifted out from the exception information. For a large amount of repeated exception information, a data association between the exception information can be efficiently found and the exception template can be generated. In a scenario in which there are a plurality of types of exception information, manual workload can be greatly reduced. In this method, a specified value of a similarity may be adjusted to restrict similarity division between the event information sets, to increase accuracy of exception template division, and reduce time consumed by manual intervention.

In a possible implementation, the server may determine central event information of a first event information set based on a similarity between exception information in the first event information set, where the first event information set may be any event information set of the plurality of event information sets.

In a possible implementation, when determining the central event information of the first event information set, the server may determine an average similarity of each piece of exception information in the first event information set, and use exception information with a highest average similarity as the central event information of the event information set. An average similarity of first exception information is an average value of similarities between the first exception information and other exception information in the first event information set, and the first exception information may be any piece of exception information in the first event information set.

In the foregoing implementation, central event information that can best represent an event information set is determined based on average similarities of exception information included in the event information set, and an exception template obtained based on the central event information can accurately reflect an event feature of the event information set.

In a possible implementation, after obtaining the plurality of pieces of central event information, the server may determine a keyword included in each of the plurality of pieces of central event information, and generate, based on the keyword included in each piece of central event information, an exception template corresponding to each piece of central event information, to obtain the plurality of exception templates. A ratio of a quantity of pieces of central event information including a same keyword to a quantity of the plurality of pieces of central event information is less than or equal to a ratio threshold.

In the foregoing implementation, during generation of the exception templates based on the central event information, text content that does not have differentiation may be removed, the keyword included in each of the plurality of pieces of central event information is determined, and an exception template corresponding to each piece of central event information is generated based on the keyword included in each piece of central event information, to obtain the plurality of exception templates. The keyword of the central event information is extracted, and the exception template is generated only based on the keyword, so that precision of a text matching similarity of the template cannot be lost, and a large amount of useless text data does not need to be stored, thereby saving storage space.

In a possible implementation, after generating the template information, the server may further determine in real time whether a template update condition is satisfied, and if the template update condition is satisfied, update the template information based on a plurality of pieces of re-obtained exception information. The template update condition includes at least one of the following: a time difference between generation time of the exception template in the template information and current time is greater than or equal to a specified duration threshold; or in quantities of similar events respectively corresponding to the plurality of exception templates included in the template information, a difference between a largest quantity of similar events and a smallest quantity of similar events is greater than a specified quantity threshold, where a quantity of similar events corresponding to any exception template in the plurality of exception templates is a quantity of pieces of exception information included in an event information set used for generating the exception template.

In the foregoing implementation, when the template update condition is satisfied, the template information may be automatically updated, and the template information does not need to be manually and periodically managed, such as adding an exception template, deleting an exception template, and updating to an optimal exception template to the template information, so that standardization and automation of template information management can be improved.

In a possible implementation, when determining the target exception template corresponding to the exception information, if there are at least two target exception templates corresponding to the exception information in the plurality of exception templates included in the template information, the server may update the template information, and determine, based on updated template information, the target exception template corresponding to the exception information.

According to a second aspect, an embodiment of this application provides a template information generation method, and the method may be performed by a server. The method may include:

dividing a plurality of pieces of obtained exception information into a plurality of event information sets, where the plurality of pieces of exception information are sent by a plurality of terminal devices running target software within a specified time period, and each of the plurality of event information sets satisfies the following condition: a similarity between every two pieces of exception information in the event information set is greater than or equal to a specified value;

determining central event information of each of the plurality of event information sets, to obtain a plurality of pieces of central event information;

generating a plurality of exception templates based on the plurality of pieces of central event information, and obtaining a repair policy corresponding to each of the plurality of exception templates; and

generating template information based on one-to-one correspondences between the plurality of exception templates and a plurality of repair policies.

In a possible implementation, the determining central event information of each of the plurality of event information sets includes:

determining central event information of a first event information set based on a similarity between exception information in the first event information set, where the first event information set is any event information set of the plurality of event information sets.

In a possible implementation, the determining central event information of a first event information set based on a similarity between exception information in the first event information set includes:

determining an average similarity of each piece of exception information in the first event information set, where an average similarity of first exception information is an average value of similarities between the first exception information and other exception information in the first event information set, and the first exception information is any piece of exception information in the first event information set; and

using exception information with a highest average similarity as the central event information of the first event information set.

In a possible implementation, the generating a plurality of exception templates based on the plurality of pieces of central event information includes:

determining a keyword included in each of the plurality of pieces of central event information, where a ratio of a quantity of pieces of central event information including a same keyword to a quantity of the plurality of pieces of central event information is less than or equal to a ratio threshold; and

generating, based on the keyword included in each piece of central event information, an exception template corresponding each piece of central event information, to obtain a plurality of exception templates.

In a possible implementation, after the generating template information, the method further includes:
if a template update condition is satisfied, updating the template information based on a plurality of pieces of re-obtained exception information, where the template update condition includes at least one of the following:

a time difference between generation time of the exception template in the template information and current time is greater than or equal to a specified duration threshold; or

in quantities of similar events respectively corresponding to the plurality of exception templates included in the template information, a difference between a largest quantity of similar events and a smallest quantity of similar events is greater than a specified quantity threshold, where a quantity of similar events corresponding to any exception template in the plurality of exception templates is a quantity of pieces of exception information included in an event information set used for generating the any exception template.

According to a third aspect, an embodiment of this application provides a computing device, including a module configured to perform any method provided in the first aspect or the second aspect.

According to a fourth aspect, an embodiment of this application provides a computing device, including a memory and a processor, where the memory stores a computer program, and the processor is configured to read and execute the computer program stored in the memory, to enable any method provided in the first aspect or the second aspect to be performed.

According to a fifth aspect, an embodiment of this application provides a computing device cluster, including at least one computing device, where each computing device includes a processor and a memory, and the processor of the at least one computing device is configured to execute instructions stored in the memory of the at least one computing device, to enable the computing device cluster to perform any method provided in the first aspect or the second aspect.

According to a sixth aspect, an embodiment of this application provides a computer-readable storage medium, where the computer-readable storage medium stores computer-executable instructions, and the computer-executable instructions are used for enabling a computer to perform any method provided in the first aspect or the second aspect.

According to a seventh aspect, an embodiment of this application provides a computer program product, including computer-executable instructions, where the computer-executable instructions are used for enabling a computer to perform any method provided in the first aspect or the second aspect.

For technical effects that can be achieved in any one of the second aspect to the seventh aspect, refer to descriptions of beneficial effects in the first aspect. Details are not described herein again.

BRIEF DESCRIPTION OF DRAWINGS

FIG. 1 is a diagram of an application scenario according to an embodiment of this application;
FIG. 2 is a flowchart of a template information generation method according to an embodiment of this application;
FIG. 3 is a schematic flowchart of step S201 in FIG. 2;
FIG. 4 is a diagram of exception information according to an embodiment of this application;
FIG. 5 is a schematic flowchart of step S203 in FIG. 2;
FIG. 6 is a diagram of template information according to an embodiment of this application;
FIG. 7 is a diagram of another template information according to an embodiment of this application;
FIG. 8 is a flowchart of a software repair method according to an embodiment of this application;
FIG. 9 is a diagram of a structure of a computing device according to an embodiment of this application;
FIG. 10 is a block diagram of a structure of a computing device according to an embodiment of this application; and
FIG. 11 is a block diagram of a structure of another computing device according to an embodiment of this application.

DESCRIPTION OF EMBODIMENTS

To make the objectives, technical solutions, and advantages of embodiments of this application clearer, the following describes embodiments of this application in detail with reference to the accompanying drawings. Terms used in implementations of this application are only used to explain specific embodiments of this application, but are not intended to limit this application.

In embodiments of this application, "a plurality of" means two or more. In view of this, in embodiments of this application, "a plurality of" may also be understood as "at least two". "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

Unless otherwise specified, ordinal numbers such as "first" and "second" in embodiments of this application are used to distinguish between a plurality of objects, and are not intended to limit a sequence, a time sequence, priorities, or importance of the plurality of objects.

During running of software, an exception that the software fails to operate normally may often occur. Because software versions are updated quickly, software repair experience cannot be reused between software of different versions. Each time an exception is handled, a large amount of manpower and time are consumed, resulting in low software repair efficiency. To improve software repair efficiency when an exception occurs, an embodiment of this application provides a software repair method. When an exception occurs during running of software, in the method, exception information is compared with stored exception templates in template information, to quickly find a target exception template corresponding to the exception information and a repair policy corresponding to the target exception template, so that a problem is quickly located and software repair is performed, thereby reducing manual intervention, reducing human resource consumption, and improving software repair efficiency.

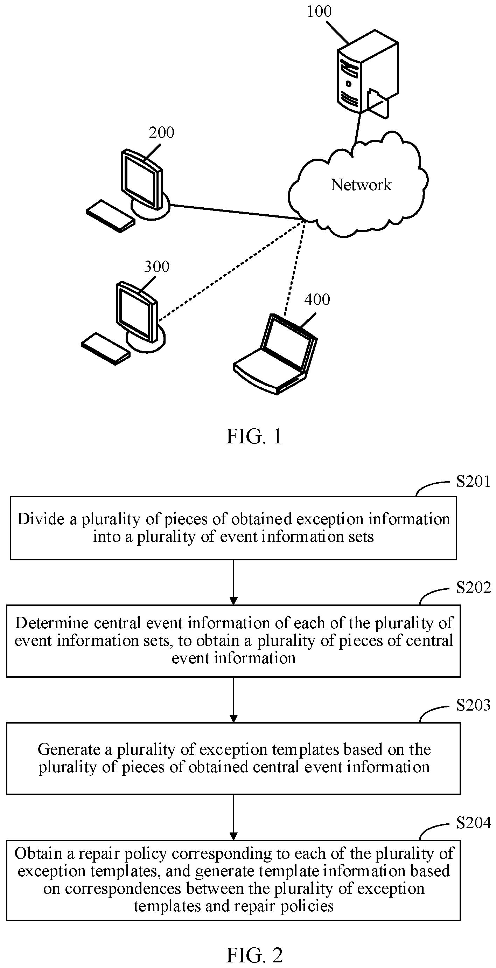

The software repair method provided in embodiments of this application may be applied to a server or another computing device. The server may be understood as a back-end server or a server cluster of software. FIG. 1 is an example of a diagram of an application scenario according to an embodiment of this application. In the application scenario, a server 100 may be connected to a plurality of terminal devices, and the terminal device may be a mobile terminal like a mobile phone, a tablet computer, or a vehicle-mounted terminal, or may be a terminal like a computer. The server 100 may be connected to the plurality of terminal devices over a network. FIG. 1 shows three terminal devices, such as a terminal device 200, a terminal device 300, and a terminal device 400. It should be noted that, in different embodiments, a quantity of terminal devices connected to the server 100 may be greater than three, or may be less than three. This is not limited in embodiments of this application.

Software A is installed on the terminal device 200, the terminal device 300, and the terminal device 400. When any terminal device runs the software A, if an exception of failing in running the software A normally occurs, the terminal device records exception data when the exception occurs, generates exception information, and sends the exception information to the server 100. The server 100 may generate template information based on a plurality of pieces of exception information sent by the plurality of terminal devices and received within a specified time period, and store the generated template information. The template information stores correspondences between a plurality of pieces of exception templates generated for the software A and repair policies. The plurality of pieces of exception templates are generated based on the plurality of pieces of obtained exception information. Subsequently, when an exception occurs during running of the software A on the terminal device, the server 100 may send, based on the exception information sent by the terminal device and the stored template information, a repair policy for repairing the software A to the terminal device, to improve efficiency of repairing the software. In the description process, the software A is merely used as an example, and the software A may be understood as any software installed on the terminal device.

It should be noted that the server 100 may alternatively obtain the plurality of pieces of exception information in another manner. This is not limited in embodiments of this application.

The following first describes a process of generating the template information by the server 100. As shown in FIG. 2, the process may include the following steps.

S201: Divide a plurality of pieces of obtained exception information into a plurality of event information sets.

As described above, the server may collect a plurality of pieces of exception information sent by a plurality of terminal devices during running of target software within a specified time period. The specified time period may be a week, a month, or longer time, and the target software may be the software A. The server may divide the plurality of pieces of obtained exception information into the plurality of event information sets. Each of the plurality of event information sets satisfies the following condition: A similarity between every two pieces of exception information in the event information set is greater than or equal to a specified similarity threshold. The specified similarity threshold may be set by a user based on experience. For example, the specified similarity threshold may be 80%, 85%, or 90%. The specified similarity threshold is used for determining whether two pieces of exception information can be divided into a same event information set. When finding that a division result does not satisfy a requirement, the user may adjust the specified similarity threshold. For example, when finding that the specified similarity threshold cannot be used for differentiating exception information of two different exceptions, the user may increase the specified similarity threshold to ensure that the two different exceptions are better differentiated.

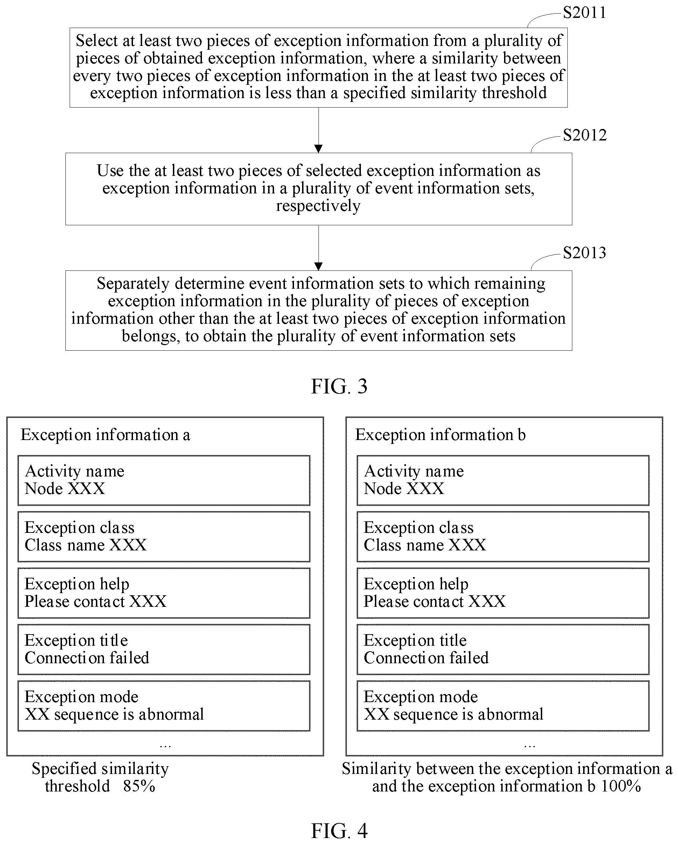

For example, the server may use a clustering method to divide the plurality of pieces of exception information into the plurality of event information sets. As shown in FIG. 3, the method may include the following steps.

Step S2011: Select at least two pieces of exception information from the plurality of pieces of obtained exception information, where a similarity between every two pieces of exception information in the at least two pieces of exception information is less than the specified similarity threshold.

**In** some embodiments, the server may separately calculate similarities of a plurality of groups of exception information to obtain a plurality of similarities. Each group of exception information may include any two pieces of exception information in the plurality of pieces of exception information. The server may delete, based on the plurality of obtained similarities, exception information corresponding to a similarity greater than or equal to the specified similarity threshold, and retain only one or more groups of exception information whose similarity is less than the specified similarity threshold, to obtain at least two pieces of candidate exception information. Then, the server may calculate a similarity between every two pieces of candidate exception information in the at least two pieces of obtained candidate exception information. If a similarity between any two pieces of candidate exception information is greater than or equal to the specified similarity threshold, only one piece of candidate exception information is retained. If a similarity between any two pieces of candidate exception information is less than the specified similarity threshold, the two pieces of candidate exception information are retained, and finally retained candidate exception information is used as exception information obtained through sifting. At least two pieces of exception information may be sifted out, where a similarity between every two pieces of exception information is less than the specified similarity threshold.

In some other embodiments, the server may randomly select one piece of exception information from the plurality of pieces of obtained exception information as first exception information. Then, the server may select, from the plurality of pieces of exception information other than the first exception information, one piece of exception information whose similarity to the first exception information is less than the specified similarity threshold as second exception information, to obtain two pieces of exception information whose similarity is less than the specified similarity threshold. Alternatively, the server may continue to select, from the plurality of pieces of exception information other than the first exception information and the second exception information, one piece of exception information whose similarity to the first exception information is less than the specified similarity threshold and whose similarity to the second exception information is also less than the specified similarity threshold as third exception information, and so on, so that more than two pieces of exception information may be obtained. In addition, a similarity between every two pieces of exception information in the more than two pieces of exception information is less than the specified similarity threshold.

For example, FIG. 4 shows a similarity between two pieces of exception information. Each piece of exception information may include a plurality of fields. For example, the exception information shown in FIG. 4 may include an activity name (activity name), an exception class (exception class), an exception help (exception help), an exception title (exception title), and an exception mode (exception module). Fields included in different software may be different, and are determined by service functions implemented by different software. The server may compare the two pieces of exception information field by field, in other words, determine the similarity between the two pieces of exception information based on a text similarity. For example, it is assumed that the exception information includes 10 fields, and each field corresponds to a same weight. If content of 10 fields of the two pieces of exception information is completely the same, the similarity between the two pieces of exception information is 100%. If content of one field of the two pieces of exception information is different, and content of the other nine fields is completely the same, the similarity between the two pieces of exception information is 90%. For the two pieces of exception information shown in FIG. 4, if fields of exception information a and exception information b are completely the same, a similarity between the exception information a and the exception information b is 100%. In some embodiments, different weights may be set for different fields, and the similarity between the two pieces of exception information is calculated based on weights corresponding to all fields.

According to the foregoing method, at least two pieces of exception information may be selected, where a similarity between every two pieces of exception information is less than the specified similarity threshold.

Step S2012: Use the at least two pieces of selected exception information as exception information in the plurality of event information sets, respectively.

Every two pieces of exception information belong to different event information sets. For example, it is assumed that two pieces of exception information, namely, first exception information and second exception information, are selected from the plurality of pieces of exception information. In this case, the first exception information and the second exception information belong to different event information sets. For example, the first exception information belongs to an event information set A, and the second exception information belongs to an event information set B. For another example, it is assumed that three pieces of exception information, namely, first exception information, second exception information, and third exception information, are selected from the plurality of pieces of exception information. The first exception information, the second exception information, and the third exception information respectively belong to different event information sets. For example, the first exception information belongs to an event information set A, the second exception information belongs to an event information set B, and the third exception information belongs to an event information set C.

Step S2013: Separately determine event information sets to which remaining exception information in the plurality of pieces of exception information other than the at least two pieces of exception information belongs, to obtain the plurality of event information sets.

For each piece of exception information in the plurality of pieces of exception information other than the at least two pieces of exception information, the following operations may be performed separately: using the exception information as to-be-classified event information; using each of a plurality of existing event information sets as a first event information set; determining a similarity between the to-be-classified event information and each piece of exception information in the first event information set; if a similarity between the to-be-classified event information and each piece of exception information in the first event information set is greater than or equal to the specified similarity threshold, adding the to-be-classified event information to the first event information set; or if a similarity between the to-be-classified event information and each piece of exception information in the first event information set is less than the specified similarity threshold, continuing to determine whether the to-be-classified event information can be added to a next event information set; and if exception information whose similarity to the to-be-classified event information is less than the specified similarity threshold exists in all the existing event information sets, adding an event information set, using the to-be-classified event information as exception information in the added event information set, and adding the added event information set to the plurality of existing event information sets.

For example, it is assumed that three pieces of exception information, namely, first exception information, second exception information, and third exception information, are selected from the plurality of pieces of exception information. The first exception information belongs to an event information set A, the second exception information belongs to an event information set B, and the third exception information belongs to an event information set C. For any exception information in remaining exception information, the exception information is used as to-be-classified event information, and a similarity between the to-be-classified event information and the first exception information in the event information set A is calculated. If the similarity between the to-be-classified event information and the first exception information is greater than or equal to the specified similarity threshold, the to-be-classified event information is added to the first data set. If the similarity between the to-be-classified event information and the first exception information is less than the specified similarity threshold, a similarity between the to-be-classified event information and the second exception information in the event information set B is calculated. If the similarity between the to-be-classified event information and the second exception information is greater than or equal to the specified similarity threshold, the to-be-classified event information is added to the second data set. If the similarity between the to-be-classified event information and the second exception information is less than the specified similarity threshold, a similarity between the to-be-classified event information and the third exception information in the event information set C is calculated. If the similarity between the to-be-classified event information and the third exception information is greater than or equal to the specified similarity threshold, the to-be-classified event information is added to the third data set. If the similarity between the to-be-classified event information and the third exception information is less than the specified similarity threshold, it may be determined that the exception information whose similarity to the to-be-classified event information is less than the specified similarity threshold exists in all the existing event information sets. An event information set is added and may be used as a fourth exception information set, and the fourth exception information set is used as an event information set to which the to-be-classified event information belongs.

In the foregoing process, the plurality of pieces of exception information may be divided into the plurality of event information sets. A similarity between every two pieces of exception information in a same event information set is greater than or equal to the specified similarity threshold, and a similarity between any two pieces of exception information belonging to different event information sets is less than the specified similarity threshold. For example, the similarity between the exception information a and the exception information b shown in FIG. 4 is 100%, and a specified similarity threshold shown in FIG. 4 is 85%. Because the similarity between the exception information a and the exception information b is greater than the specified similarity threshold, the exception information a and the exception information b belong to a same event information set.

S202: Determine central event information of each of the plurality of event information sets, to obtain a plurality of pieces of central event information.

The server may determine the central event information of each of the plurality of event information sets based on similarities between exception information in the plurality of event information sets, to obtain the plurality of pieces of central event information.

In some embodiments, the server may perform the following operation for each of the plurality of event information sets: determining an average similarity of each piece of exception information in the event information set, where an average similarity of first exception information is an average value of similarities between the first exception information and other exception information, the other exception information is exception information other than the first exception information in the event information set, and the first exception information may be any exception information in the event information set. The server may use exception information with a highest average similarity as central event information of the event information set.

An event information set A is used as an example. It is assumed that the event information set A includes four pieces of exception information, namely, exception information a, exception information b, exception information c, and exception information d. The exception information a is used as an example. Assuming that a similarity between the exception information a and the exception information b is 100%, a similarity between the exception information a and the exception information c is 90%, and a similarity between the exception information a and the exception information d is 95%, an average similarity of the exception information a is an average value of similarities between the exception information a and the other three pieces of exception information, that is, (100%+90%+95%)/3=95%. Similarly, an average similarity of the exception information b, an average similarity of the exception information c, and an average similarity of the exception information d may be determined. Assuming that the average similarity of the exception information b is 90%, the average similarity of the exception information c is 92%, and the average similarity of the exception information d is 90%, the exception information a has the largest average similarity in the exception information a, the exception information b, the exception information c, and the exception information d. Therefore, the exception information a may be used as central event information of the event information set A. The central event information may also be considered as optimal exception information that is most suitable for being used as a template in an event information set.

The foregoing method is performed for each event information set, so that the central event information of each event information set may be determined, to obtain the plurality of pieces of central event information.

S203: Generate a plurality of exception templates based on the plurality of pieces of obtained central event information.

In some embodiments, each piece of central event information may be used as an exception template.

In some other embodiments, considering that some fields in the plurality of pieces of obtained central event information include same text content, in other words, the same text content repeatedly appears in a same field in each piece of central event information, the text content does not have differentiation for classification of the exception information. For example, in the field "exception help", if the word or text content "please" appears in a corresponding field of each piece of central event information, it may be determined that the text content does not have differentiation for classification of the exception information. During generation of the exception templates based on the central event information, the text content that does not have the differentiation may be removed, a keyword included in each of the plurality of pieces of central event information is determined, and an exception template corresponding to each piece of central event information is generated based on the keyword included in each piece of central event information, to obtain the plurality of exception templates. The keyword of the central event information is extracted, and the exception template is generated only based on the keyword, so that precision of a text matching similarity of the template cannot be lost, and a large amount of useless text data does not need to be stored, thereby saving storage space.

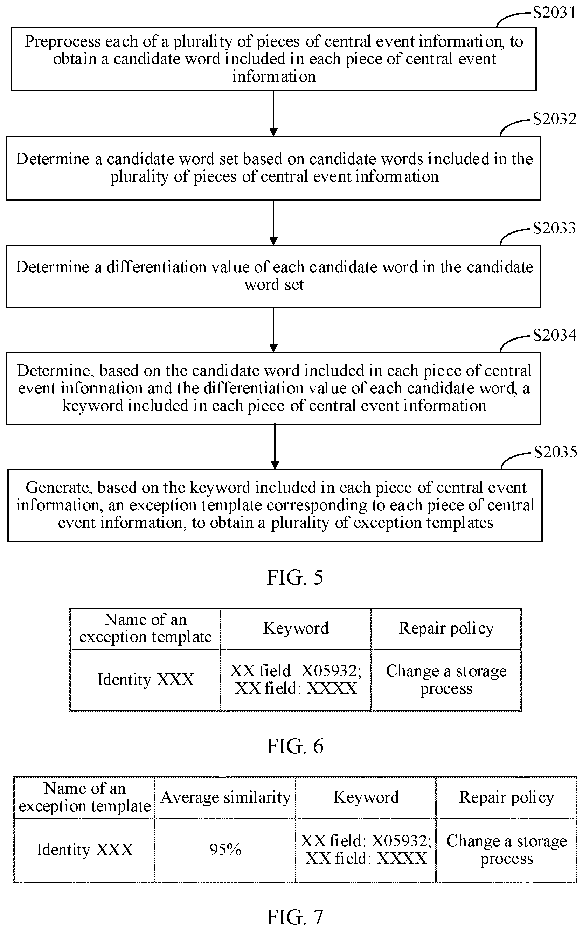

For example, after the plurality of pieces of central event information are obtained, the exception templates may be generated through the method shown in FIG. 5. The method may include the following steps.

S2031: Preprocess each of the plurality of pieces of central event information, to obtain a candidate word included in each piece of central event information.

For each piece of central event information, the server may perform preprocessing, such as word segmentation and stop word removal, on each field in the central event information. For example, the server may use Jieba word segmentation method or another general word segmentation method to perform word segmentation on the central event information, to obtain a plurality of words. For example, a field in the central event information may include a plurality of words, some words may include a single character, and some other words may include a plurality of characters. It is assumed that text content of a field is "please contact the improver of software", and "please", "contact", "the", "improver", "of", and "software" are obtained through word segmentation. The words obtained through word segmentation may include not only notional words with an actual meaning, such as nouns, verbs, and adjectives, but also form words without an actual meaning, such as prepositions, conjunctions, temperaments, auxiliary words, and exclamations. For example, the word "of" obtained through word segmentation has no actual meaning, and is a form word. In a computer field, these form words are referred to as stop words. After these stop words are ignored, semantics of entire text are not affected. Therefore, in some embodiments, stop words in a plurality of words obtained through word segmentation may be removed, and remaining words with an actual meaning are used as candidate words of the central event information.

It should be noted that, in some other embodiments, the stop word may not be removed, and all words obtained through word segmentation are used as candidate words. Alternatively, all fields of some central event information may not include a stop word, and therefore all the words obtained through word segmentation are used as the candidate words of the central event information.

In the foregoing process, the candidate word included in each of the plurality of pieces of central event information may be determined.

S2032: Determine a candidate word set based on candidate words included in the plurality of pieces of central event information.

The candidate word set includes the candidate word included in each piece of central event information.

S2033: Determine a differentiation value of each candidate word in the candidate word set.

For example, a term frequency-inverse document frequency (term frequency-inverse document frequency, TF-IDF) value of each candidate word may be determined, and a TF-IDF value of a candidate word is used as a differentiation value of the candidate word. The TF-IDF value may be used for evaluating an importance degree of a candidate word for the central event information. The importance degree of the candidate word for the central event information is in direct proportion to a quantity of times that the candidate word appears in the central event information, and is in inverse proportion to a quantity of times that the candidate word appears in central event information other than the central event information. In this embodiment of this application, if a candidate word appears at a high frequency TF in one piece of central event information, and rarely appears in another piece of central event information, it may be considered that the candidate word has a good differentiation capability. Therefore, a TF-IDF value of the candidate word is large, in other words, a differentiation value is large.

For any candidate word, for example, an $i^{th}$ candidate word, a TF-IDF value of the candidate word may be determined in the following process. First, a TF value $tf_i$ of the $i^{th}$ candidate word is determined:

$$tf_i = \frac{n_{ij}}{\sum_k n_{k,j}}$$

$n_{ij}$ is a quantity of times that the $i^{th}$ candidate word appears in a $j^{th}$ piece of central event information, and $\sum_k n_{k,j}$ is a sum of quantities of times that all candidate words appear in the $j^{th}$ piece of central event information.

Then, an IDF value $idf_i$ of the $i^{th}$ candidate word is determined:

$$idf_i = \log\frac{|D|}{|\{j: t_i \in dj\}|}$$

$|D|$ is a quantity of pieces of central event information, namely, a quantity of event information sets.

$|\{j: t_i \in dj\}|$ represents a quantity of pieces of central event information including the $i^{th}$ candidate word.

The TF-IDF value of the $i^{th}$ candidate word may be represented as: TF-IDF=$tf_i$*$idf_i$. The TF-IDF value of the $i^{th}$ candidate word is used as the differentiation value of the $i^{th}$ candidate word.

In the foregoing process, the differentiation value of each candidate word in the candidate word set may be determined.

S2034: Determine, based on the candidate word included in each piece of central event information and the differentiation value of each candidate word, a keyword included in each piece of central event information.

In some embodiments, after the differentiation value of each candidate word in the candidate word set is determined, a candidate word whose differentiation value is greater than or equal to a specified differentiation threshold may be used as a keyword, to generate a keyword set. Alternatively, the candidate words in the candidate word set are ranked in descending order of the differentiation values, and a first specified quantity of candidate words that are ranked at the top are used as keywords, to generate a keyword set. For example, the specified differentiation threshold may be 0.01, and the first specified quantity may be 15. In other words, the top 15 candidate words may be used as keywords, to generate the keyword set. For any piece of central event information, a candidate word that is in candidate words included in the central event information and belongs to the keyword set may be used as a keyword included in the central event information.

In some other embodiments, after the differentiation value of each candidate word in the candidate word set is determined, for any piece of central event information, a candidate word that is in candidate words included in the central event information and whose differentiation value is greater than or equal to the specified differentiation threshold may be used as a keyword included in the central event information.

**In** some other embodiments, after the differentiation value of each candidate word in the candidate word set is determined, the candidate words in the candidate word set may be ranked in descending order of the differentiation values. For any piece of central event information, a candidate word that is in candidate words included in the central event information and is ranked before a specified value may be used as a keyword included in the central event information.

**In** some other embodiments, after the differentiation value of each candidate word in the candidate word set is determined, for any piece of central event information, candidate words included in the central event information may be ranked in descending order of the differentiation values, and a second specified quantity of candidate words that are ranked at the top are used as keywords included in the central event information. The second specified quantity may be less than the first specified quantity. For example, the second specified quantity may be 5.

According to the foregoing method, the keyword included in each of the plurality of pieces of central event information may be determined. A ratio of a quantity of pieces of central event information including a same keyword to a quantity of the plurality of pieces of central event information is less than or equal to a ratio threshold.

S2035: Generate, based on the keyword included in each piece of central event information, an exception template corresponding to each piece of central event information, to obtain the plurality of exception templates.

For each piece of central event information, an exception template corresponding to the central event information may be generated based on a keyword included in the central event information, and the exception template includes only the keyword included in the central event information.

The foregoing process of extracting the keyword and generating the exception template may be referred to as a process of making a template lightweight. A purpose of making a template lightweight is to reduce a quantity of words in each exception template. **In** an actual implementation process, a large quantity of event information sets and pieces of central event information are generated. If the central event information is directly used as an exception template, large storage space is occupied during storage. **In** addition, one exception template may have a plurality of words that are the same as words in another template, and a direct difference between the exception templates cannot be well reflected. After the keyword is extracted, a word with a small difference in the exception template may be deleted. This not only saves storage space required for storing the exception template, but also improves a difference between the exception templates, thereby avoiding confusion during use.

After the plurality of exception templates are obtained in the foregoing process in step S203, step S204 may continue to be performed.

S204: Obtain a repair policy corresponding to each of the plurality of exception templates, and generate the template information based on correspondences between the plurality of exception templates and repair policies.

A repair policy corresponding to any exception template may be a repair policy used when software repair is performed on an exception corresponding to central event information for generating the exception template. A correspondence between each of the plurality of exception templates and a repair policy is established, to obtain the template information.

The template information may include a plurality of pieces of correspondence information. **In** some embodiments, as shown in FIG. 6, one piece of correspondence information may include a name of an exception template, a keyword included in the exception template, and a repair policy corresponding to the exception template. **In** some other embodiments, as shown in FIG. 7, one piece of correspondence information may include a name of an exception template, an average similarity of central event information for generating the exception template, a keyword included in the exception template, and a repair policy corresponding to the exception template.

After the template information is generated, when an exception occurs during running of the software A on the terminal device, the server may provide an appropriate repair policy for the terminal device based on the template information, thereby saving human resources and improving software repair efficiency.

According to the template information generation method provided in this embodiment of this application, data of fields of different exception information is compared to determine categories of exceptions corresponding to the exception information. A plurality of pieces of exception information are divided into a plurality of mutually independent event information sets, an independent exception template is generated for each event information set, and a corresponding repair policy is found, to generate template information. The generated template information includes a plurality of exception templates, each exception template corresponds to a type of exception, and a feasible repair policy for each type of exception is provided based on the template information. During generation of the exception templates and the template information, the exception templates do not need to be manually sifted out from the exception information. For a large amount of repeated exception information, a data association between the exception information can be efficiently found and the exception template can be generated. In a scenario in which there are a plurality of types of exception information, manual workload can be greatly reduced and accuracy of template division can be improved. In this method, a specified similarity threshold may be adjusted to restrict similarity division between the event information sets, to ensure and reduce time consumed by manual intervention.

In some related technologies, an artificial intelligence (artificial intelligence, AI) algorithm model is used to analyze exception information to predict a type of the exception information. Limited by a theoretical basis of machine learning and deep learning, the AI algorithm model depends on continuous data when predicting the type of the exception information, in other words, predicts only continuous exception information and generates an event information set, and can infer a next exception only based on a plurality of continuous exceptions, to generate an appropriate event information set. Therefore, the AI algorithm model not only requires training time, but also has a high requirement on time sequence of the exception information. To be specific, when data does not satisfy a condition of inferring a next piece of exception information from one piece of exception information, prediction cannot be performed and the event information set cannot be generated. As a result, an available exception template cannot be obtained.

In comparison with the foregoing related technology, in this embodiment of this application, unsupervised classification for a text similarity is performed on exception information, an exception template is generated for a large quantity of repeated or highly similar exceptions, and a repair information generation method without a need of machine learning or deep learning is established. In this embodiment of this application, the AI algorithm model is not required, and continuity of exception information is not required. Random and discontinuous exception information can be classified, to satisfy that an appropriate exception template can be found in a case of data distribution of different products and different services. Therefore, application scope of this embodiment of this application is wider.

The template information generation method provided in this embodiment of this application is applicable to a scenario in which a large quantity of exceptions occurs repeatedly, a software version is iterated quickly, and a problem of an exception cannot be detected in a timely manner and experience of a related repair policy cannot be reused in a current software version, to quickly and accurately find a common feature of exception information, generate a corresponding exception template, and reuse a repair policy corresponding to an exception to a next exception of a same type. In this embodiment of this application, the exception information is divided into different event information sets in a text similarity calculation manner, so that a corresponding exception template can be uniformly generated for exception information in each field. Even if the template information generation method provided in this embodiment of this application is used across fields, consistency and uniformity of the exception template can be ensured.

In addition, in this embodiment of this application, not only exception information sets can be automatically generated, and central event information of each event information set can be found, but also a keyword corresponding to each piece of central event information can be extracted. Exception templates are generated based on keywords, and the exception templates and template information are stored in a lightweight manner.

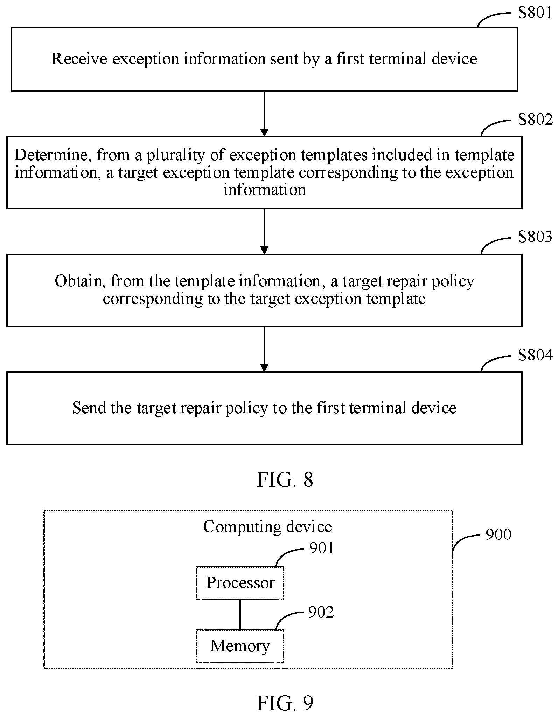

FIG. 8 is a flowchart of a software repair method according to an embodiment of this application. The software repair method may be performed by a server. As shown in FIG. 8, the method may include the following steps.

S801: Receive exception information sent by a first terminal device.

The exception information is information generated when an exception occurs during running of target software on the first terminal device. The first terminal device may be any terminal device connected to the server. In other words, any terminal device connected to the server may send the exception information to the server. For example, the terminal device 200 shown in FIG. 1 is used, and the target software is the software A. When running the software A, if the terminal device 200 sends an exception of failing in running the software A normally, the terminal device 200 may send exception information to the server.

S802: Determine, from a plurality of exception templates included in template information, a target exception template corresponding to the exception information.

A similarity between the target exception template and the exception information is greater than a similarity threshold. The template information further includes one-to-one correspondences between the plurality of exception templates and a plurality of repair policies.

The exception information is separately compared with a plurality of pre-stored exception templates in the template information, to obtain a similarity between the exception information and each of the plurality of exception templates.

The similarity between the exception information and any exception template may be determined based on whether a keyword of each field of the exception template is included in a corresponding field of the exception information. If the keyword of each field of the exception template is included in corresponding fields of the exception information, the similarity between the exception information and the exception template is 100%.

The server determines, based on the similarity between the exception information and each of the plurality of exception templates, the target exception template corresponding to the exception information.

In some embodiments, in the plurality of exception templates, the server may use an exception template whose similarity to the exception information is greater than the similarity threshold as the target exception template corresponding to the exception information.

S803: Obtain, from the template information, a target repair policy corresponding to the target exception template.

S804: Send the target repair policy to the first terminal device.

The server sends the target repair policy corresponding to the target exception template to the first terminal device, so that the terminal device repairs the target software according to the first repair policy corresponding to the target exception template.

According to the software repair method provided in this embodiment of this application, when an exception occurs during running of software, exception information is compared with an exception template in template information, to quickly and accurately find a target exception template corresponding to the exception information and a repair policy corresponding to the target exception template, so that for repeated occurrence of a same type of exception, a problem is quickly located and software repair is performed, thereby reducing manual intervention, reducing human resource consumption, and improving software repair efficiency.

In some embodiments, after the template information is generated, because data of some exceptions changes or some exceptions no longer occur over time, some exception templates may be outdated, and consequently the template information is no longer applicable. **In** view of this, a life cycle of the template information can be managed to ensure availability of the template information. For example, metadata marking may be performed on each exception template in the generated template information, and marked metadata may include any one of the following: generation time of the exception template and a quantity of similar events of the exception template. The quantity of similar events of the exception template is a quantity of pieces of exception information included in an event information set to which central event information for generating the exception template belongs. In similar events in all exception templates, if a difference between a largest quantity of similar events and a smallest quantity of similar events is less than or equal to a specified quantity threshold, it may be considered that the generated exception templates are evenly distributed, on the contrary, if a difference between a largest quantity of similar events and a smallest quantity of similar events is greater than a specified quantity threshold, it may be considered that the generated exception templates are unevenly distributed. When the generated exception templates are unevenly distributed, a plurality of pieces of exception information may be re-obtained, exception templates are re-generated based on the re-obtained exception information, and a repair policy corresponding to each newly generated exception template is re-determined, in other words, the template information is updated based on the re-obtained exception information. If a time difference between generation time of one or more exception templates and current time is greater than or equal to a specified duration threshold, a plurality of pieces of exception information may be re-obtained, and exception templates are re-generated based on the re-obtained exception information. The plurality of pieces of re-obtained exception time data may include the originally obtained exception time data and the newly obtained exception time data. In some embodiments, when an exception template is generated for a long time, and the exception template is not used or applied for a long time, the exception template may be deleted from the template information. If a type of exception occurs frequently but no corresponding exception template is generated, the exception template may be added in the template information.

In some embodiments, when at least one of the following template update conditions is satisfied, the template information may be updated based on the plurality of pieces of re-obtained exception information: A time difference between generation time of at least one exception template in the template information and the current time is greater than or equal to the specified duration threshold. In the quantity of similar events of the exception templates included in the template information, the difference between the largest quantity of similar events and the smallest quantity of similar events is greater than the specified quantity threshold. During determining of the target exception template corresponding to the exception information, two or more target exception templates are obtained. During determining of the target exception template corresponding to the exception information, two or more target exception templates are obtained, and it indicates that the exception template in the existing template information cannot differentiate an exception. Therefore, the template information needs to be updated.

In the foregoing process, the template information can be automatically updated, without a need of manual and regular management of the template information, adding an exception template, deleting an exception template, and updating to an optimal exception template to the template information, so that standardization and automation of template information management can be improved.

Based on a same technical concept as the foregoing embodiments, an embodiment of this application further provides a computing device. The computing device may be the server 100 shown in FIG. 1. The computing device may be configured to implement functions of the method embodiment shown in FIG. 2 or FIG. 8, and therefore can implement beneficial effects of the foregoing method embodiment.

In some embodiments, a structure of a computing device 900 may be shown in FIG. 9, including a processor 901 and a memory 902 connected to the processor 901. The processor 901 and the memory 902 may be connected to each other via a bus. The processor 901 may be used as a main processor of the computing device 900, namely, a control core of the computing device 900. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. A specific connection medium between the processor 901 and the memory 902 is not limited in embodiments of this application.

The memory 902 may include the foregoing memory. The memory 902 may be a volatile memory, for example, a random access memory. Alternatively, the memory may be a non-volatile memory, for example, a read-only memory ROM, a flash memory, a hard disk drive (hard disk drive, HDD), or a solid-state drive (solid-state drive, SSD), or the memory 902 is any other medium that can be configured to carry or store expected program code in a form of an instruction or a data structure and that can be accessed by a computer, but is not limited thereto. The memory 902 may be a combination of the foregoing memories. The memory 902 may be configured to store a software program and a module.

The processor 901 may include one or more processors. The processor 901 runs the software program and the module that are stored in the memory 902, to perform various function applications of a physical machine and data processing, for example, the method provided in FIG. 2 or FIG. 8 in embodiments of this application.

It may be understood that the structure shown in this embodiment of this application does not constitute a specific limitation on the computing device. In some other embodiments of this application, the computing device may include more or fewer components than those shown in the figure, or some components may be combined, or some components may be split, or there may be a different component arrangement. The components shown in the figure may be implemented by hardware, software, or a combination of software and hardware.

Based on a same technical concept as the foregoing embodiments, an embodiment of this application further provides a computing device cluster. The computing device cluster may include at least one computing device. In some embodiments, each of the at least one computing device may have an internal structure shown in FIG. 9, including a processor and a memory. The processor of the at least one computing device is configured to execute instructions stored in the memory of the at least one computing device, to enable the computing device cluster to perform a function of the method embodiment shown in FIG. 2 or FIG. 8.

Based on a same technical concept as the foregoing embodiments, an embodiment of this application further provides a computing device. The computing device may be configured to implement a function of any software repair method provided in the foregoing embodiments, and therefore can implement beneficial effects of the method embodiment shown in FIG. 8.

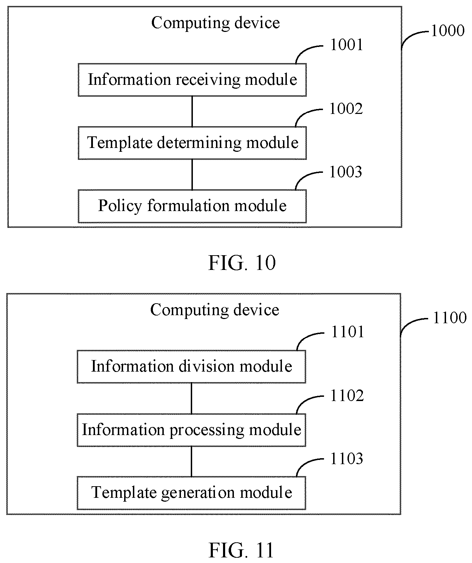

As shown in FIG. 10, a computing device 1000 may include an information receiving module 1001, a template determining module 1002, and a policy formulation module 1003. The computing device 1000 may be configured to implement a function of the software repair method in the foregoing embodiments, and therefore can implement beneficial effects of the foregoing embodiments of the software repair method.

The information receiving module 1001 may be configured to receive exception information sent by a first terminal device, where the exception information is information generated when an exception occurs during running of target software on the first terminal device.

The template determining module 1002 may be configured to determine, from a plurality of exception templates included in template information, a target exception template corresponding to the exception information, where a similarity between the target exception template and the exception information is greater than a specified similarity threshold, and the template information further includes one-to-one correspondences between the plurality of exception templates and a plurality of repair policies.

The policy formulation module 1003 may be configured to obtain, from the template information, a target repair policy corresponding to the target exception template, and send the target repair policy to the first terminal device, where the target repair policy is used by the first terminal device to repair the exception generated by the target software.

Based on a same technical concept as the foregoing embodiments, an embodiment of this application further provides a computing device. The computing device may be configured to implement a function of any template information generation method provided in the foregoing embodiments, and therefore can implement beneficial effects of the method embodiment shown in FIG. 2.

As shown in FIG. 11, a computing device 1100 may include an information division module 1101, an information processing module 1102, and a template generation module 1103. The computing device 1100 may be configured to implement a function of the template information generation method in the foregoing embodiments, and therefore can implement beneficial effects of the foregoing embodiments of the template information generation method.

The information division module 1101 may be configured to divide a plurality of pieces of obtained exception information into a plurality of event information sets, where the plurality of pieces of exception information are sent by a plurality of terminal devices running target software within a specified time period, and each of the plurality of event information sets satisfies the following condition: A similarity between every two pieces of exception information in the event information set is greater than or equal to a specified value.

The information processing module 1102 may be configured to determine central event information of each of the plurality of event information sets, to obtain a plurality of pieces of central event information.

The template generation module 1103 may be configured to generate a plurality of exception templates based on the plurality of pieces of central event information, obtain a repair policy corresponding to each of the plurality of exception templates, and generate template information based on one-to-one correspondences between the plurality of exception templates and a plurality of repair policies.

In some implementations, the information processing module 1102 may be specifically configured to determine central event information of a first event information set based on a similarity between exception information in the first event information set, where the first event information set is any event information set of the plurality of event information sets.

In some implementations, the information processing module 1102 may be specifically configured to determine an average similarity of each piece of exception information in the first event information set, and use exception information with a highest average similarity as the central event information of the first event information set. An average similarity of first exception information is an average value of similarities between the first exception information and other exception information in the first event information set, and the first exception information is any exception information in the first event information set.

In some implementations, the template generation module 1103 may be specifically configured to determine a keyword included in each of the plurality of pieces of central event information, where a ratio of a quantity of pieces of central event information including a same keyword to a quantity of pieces of the plurality of pieces of central event information is less than or equal to a ratio threshold; and generate, based on the keyword included in each piece of central event information, an exception template corresponding to each piece of central event information, to obtain the plurality of exception templates.

In some implementations, the template generation module 1103 may be further configured to: after the template information is generated, if a template update condition is satisfied, update the template information based on a plurality of pieces of re-obtained exception information, where the template update condition includes at least one of the following: a time difference between generation time of the exception template in the template information and current time is greater than or equal to a specified duration threshold; or in quantities of similar events respectively corresponding to the plurality of exception templates included in the template information, a difference between a largest quantity of similar events and a smallest quantity of similar events is greater than a specified quantity threshold, where a quantity of similar events corresponding to any exception template in the plurality of exception templates is a quantity of pieces of exception information included in an event information set used for generating the any exception template.

The method steps in embodiments of this application may be implemented in a hardware manner, or may be implemented in a manner of executing a computer program or instructions by the processor. The computer program or the instructions may constitute a computer program product. An embodiment of this application further provides a computer program product, including computer-executable instructions. In an embodiment, the computer-executable instructions are used to enable a computer to perform a function in the method embodiment shown in FIG. 2 or FIG. 8.

The computer-executable instructions may be stored in a computer-readable storage medium. An embodiment of this application further provides a computer-readable storage medium, and the computer-readable storage medium stores executable-instructions. In an embodiment, the computer-executable instructions are used to enable a computer to perform a function in the method embodiment shown in FIG. 2 or FIG. 8.

The computer-readable storage medium provided in this embodiment of this application may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically ePROM, EEPROM), a register, a hard disk drive, a removable hard disk, a CD-ROM, or any other form of computer-readable storage medium well-known in the art.

The computer-executable instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape, or may be an optical medium, for example, a digital video disc (digital video disc, DVD), or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. In addition, the terms "include", "have", and any variant thereof are intended to cover non-exclusive inclusion, for example, include a series of steps or units. For example, a method, system, product, or device is not necessarily limited to those steps or units expressly listed, but may include other steps or units not expressly listed or inherent to such a process, method, product, or device.

Although this application is described with reference to specific features and embodiments thereof, it is clear that various modifications and combinations may be made to them without departing from the spirit and scope of this application. Correspondingly, this specification and the accompanying drawings are merely example descriptions of solutions defined by the appended claims, and are considered as any or all of modifications, variations, combinations, or equivalents that cover the scope of this application.

It is clear that a person skilled in the art can make various modifications and variations to this application without departing from the scope of this application. In this case, this application is intended to cover these modifications and variations of embodiments of this application provided that they fall within the scope of protection defined by the following claims and their equivalent technologies.

**Claims**

1. A software repair method, wherein the method comprises:

   receiving exception information sent by a first terminal device, wherein the exception information is information generated when an exception occurs during running of target software on the first terminal device;
   determining, from a plurality of exception templates comprised in template information, a target exception template corresponding to the exception information, wherein a similarity between the target exception template and the exception information is greater than a specified similarity threshold, and the template information further comprises one-to-one correspondences between the plurality of exception templates and a plurality of repair policies; and
   obtaining, from the template information, a target repair policy corresponding to the target exception template, and sending the target repair policy to the first terminal device, wherein the target repair policy is used by the first terminal device to repair the exception generated by the target software.

2. The method according to claim 1, wherein the method further comprises:

   dividing a plurality of pieces of obtained exception information into a plurality of event information sets, wherein the plurality of pieces of exception information are sent by a plurality of terminal devices running the target software within a specified time period, and each of the plurality of event information sets satisfies the following condition: a similarity between every two pieces of exception information in the event information set is greater than or equal to a specified value;
   determining central event information of each of the plurality of event information sets, to obtain a plurality of pieces of central event information; and
   generating the plurality of exception templates based on the plurality of pieces of central event information.

3. The method according to claim 2, wherein the determining central event information of each of the plurality of event information sets comprises:
   determining central event information of a first event information set based on a similarity between exception information in the first event information set, wherein the first event information set is any event information set of the plurality of event information sets.

4. The method according to claim 2 or 3, wherein the determining central event information of a first event information set based on a similarity between exception information in the first event information set comprises:

   determining an average similarity of each piece of exception information in the first event information set, wherein an average similarity of first exception information is an average value of similarities between the first exception information and other exception information in the first event information set, and the first exception information is any piece of exception information in the first event information set; and
   using exception information with a highest average similarity as the central event information of the first event information set.

5. The method according to any one of claims 2 to 4, wherein the generating the plurality of exception templates based on the plurality of pieces of central event information comprises:

   determining a keyword comprised in each of the plurality of pieces of central event information, wherein a ratio of a quantity of pieces of central event information comprising a same keyword to a quantity of the plurality of pieces of central event information is less than or equal to a ratio threshold; and

generating, based on the keyword comprised in each piece of central event information, an exception template corresponding to each piece of central event information, to obtain the plurality of exception templates.

6. The method according to any one of claims 2 to 5, wherein after generating the plurality of exception templates, the method further comprises:
if a template update condition is satisfied, updating the template information based on a plurality of pieces of re-obtained exception information, wherein the template update condition comprises at least one of the following:

a time difference between generation time of the exception template in the template information and current time is greater than or equal to a specified duration threshold; or
in quantities of similar events respectively corresponding to the plurality of exception templates comprised in the template information, a difference between a largest quantity of similar events and a smallest quantity of similar events is greater than a specified quantity threshold, wherein a quantity of similar events corresponding to any exception template in the plurality of exception templates is a quantity of pieces of exception information comprised in an event information set used for generating the any exception template.

7. The method according to any one of claims 1 to 6, wherein the determining, from a plurality of exception templates comprised in template information, a target exception template corresponding to the exception information comprises:
if there are at least two target exception templates corresponding to the exception information in the plurality of exception templates comprised in the template information, updating the template information, and determining, based on updated template information, the target exception template corresponding to the exception information.

8. A template information generation method, wherein the method comprises:

dividing a plurality of pieces of obtained exception information into a plurality of event information sets, wherein the plurality of pieces of exception information are sent by a plurality of terminal devices running target software within a specified time period, and each of the plurality of event information sets satisfies the following condition: a similarity between every two pieces of exception information in the event information set is greater than or equal to a specified value;
determining central event information of each of the plurality of event information sets, to obtain a plurality of pieces of central event information;
generating a plurality of exception templates based on the plurality of pieces of central event information, and obtaining a repair policy corresponding to each of the plurality of exception templates; and
generating template information based on one-to-one correspondences between the plurality of exception templates and a plurality of repair policies.

9. The method according to claim 8, wherein the determining central event information of each of the plurality of event information sets comprises:
determining central event information of a first event information set based on a similarity between exception information in the first event information set, wherein the first event information set is any event information set of the plurality of event information sets.

10. The method according to claim 9, wherein the determining central event information of a first event information set based on a similarity between exception information in the first event information set comprises:

determining an average similarity of each piece of exception information in the first event information set, wherein an average similarity of first exception information is an average value of similarities between the first exception information and other exception information in the first event information set, and the first exception information is any piece of exception information in the first event information set; and
using exception information with a highest average similarity as the central event information of the first event information set.

11. The method according to any one of claims 8 to 10, wherein the generating a plurality of exception templates based on the plurality of pieces of central event information comprises:

determining a keyword comprised in each of the plurality of pieces of central event information, wherein a ratio of a quantity of pieces of central event information comprising a same keyword to a quantity of the plurality of pieces of central event information is less than or equal to a ratio threshold; and
generating, based on the keyword comprised in each piece of central event information, an exception template corresponding to each piece of central event information, to obtain the plurality of exception templates.

12. The method according to any one of claims 8 to 11, wherein after the generating template information, the method further comprises:

if a template update condition is satisfied, updating the template information based on a plurality of pieces of re-obtained exception information, wherein the template update condition comprises at least one of the following:

a time difference between generation time of the exception template in the template information and current time is greater than or equal to a specified duration threshold; or

in quantities of similar events respectively corresponding to the plurality of exception templates comprised in the template information, a difference between a largest quantity of similar events and a smallest quantity of similar events is greater than a specified quantity threshold, wherein a quantity of similar events corresponding to any exception template in the plurality of exception templates is a quantity of pieces of exception information comprised in an event information set used for generating the any exception template.

13. A computing device, comprising a module configured to perform the method according to any one of claims 1 to 12.

14. A computing device, comprising a memory and a processor, wherein the memory stores a computer program, and the processor is configured to read and execute the computer program stored in the memory, to enable the method according to any one of claims 1 to 12 to be performed.

15. A computing device cluster, comprising at least one computing device, wherein each of the at least one computing device comprises a processor and a memory; and
the processor of the at least one computing device is configured to execute instructions stored in the memory of the at least one computing device, to enable the computing device cluster to perform the method according to any one of claims 1 to 12.

16. A computer-readable storage medium, storing computer-executable instructions, wherein the computer-executable instructions are used for enabling a computer to perform the method according to any one of claims 1 to 12.

17. A computer program product, comprising computer-executable instructions, wherein the computer-executable instructions are used for enabling a computer to perform the method according to any one of claims 1 to 12.

FIG. 1

S201

Divide a plurality of pieces of obtained exception information into a plurality of event information sets

S202

Determine central event information of each of the plurality of event information sets, to obtain a plurality of pieces of central event information

S203

Generate a plurality of exception templates based on the plurality of pieces of obtained central event information

S204

Obtain a repair policy corresponding to each of the plurality of exception templates, and generate template information based on correspondences between the plurality of exception templates and repair policies

FIG. 2

S2011

Select at least two pieces of exception information from a plurality of pieces of obtained exception information, where a similarity between every two pieces of exception information in the at least two pieces of exception information is less than a specified similarity threshold

S2012

Use the at least two pieces of selected exception information as exception information in a plurality of event information sets, respectively

S2013

Separately determine event information sets to which remaining exception information in the plurality of pieces of exception information other than the at least two pieces of exception information belongs, to obtain the plurality of event information sets

FIG. 3

| Exception information a | Exception information b |
|---|---|
| Activity name<br>Node XXX | Activity name<br>Node XXX |
| Exception class<br>Class name XXX | Exception class<br>Class name XXX |
| Exception help<br>Please contact XXX | Exception help<br>Please contact XXX |
| Exception title<br>Connection failed | Exception title<br>Connection failed |
| Exception mode<br>XX sequence is abnormal | Exception mode<br>XX sequence is abnormal |
| ... | ... |

Specified similarity threshold 85%

Similarity between the exception information a and the exception information b 100%

FIG. 4

S2031

Preprocess each of a plurality of pieces of central event information, to obtain a candidate word included in each piece of central event information

S2032

Determine a candidate word set based on candidate words included in the plurality of pieces of central event information

S2033

Determine a differentiation value of each candidate word in the candidate word set

S2034

Determine, based on the candidate word included in each piece of central event information and the differentiation value of each candidate word, a keyword included in each piece of central event information

S2035

Generate, based on the keyword included in each piece of central event information, an exception template corresponding to each piece of central event information, to obtain a plurality of exception templates

FIG. 5

| Name of an exception template | Keyword | Repair policy |
|---|---|---|
| Identity XXX | XX field: X05932; XX field: XXXX | Change a storage process |

FIG. 6

| Name of an exception template | Average similarity | Keyword | Repair policy |
|---|---|---|---|
| Identity XXX | 95% | XX field: X05932; XX field: XXXX | Change a storage process |

FIG. 7

S801

Receive exception information sent by a first terminal device

S802

Determine, from a plurality of exception templates included in template information, a target exception template corresponding to the exception information

S803

Obtain, from the template information, a target repair policy corresponding to the target exception template

S804

Send the target repair policy to the first terminal device

FIG. 8

Computing device

900

Processor
901

Memory
902

FIG. 9

Computing device —1000

Information receiving module ⌐ 1001

Template determining module ⌐ 1002

Policy formulation module ⌐ 1003

FIG. 10

Computing device ⌐ 1100

Information division module ⌐ 1101

Information processing module ⌐ 1102

Template generation module ⌐ 1103

FIG. 11

## INTERNATIONAL SEARCH REPORT

| International application No. |
|---|
| **PCT/CN2023/124802** |

### A. CLASSIFICATION OF SUBJECT MATTER

G06F 8/70(2018.01)i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

VEN, CNABS, CNTXT, WOTXT, USTXT, EPTXT, CNKI, IEEE: 软件, 修复, 异常, 问题, 模板, 相似度, 阈值, 集合, 中心事件, automatically, condition, abnormal, repairing, weight

### C. DOCUMENTS CONSIDERED TO BE RELEVANT

| Category* | Citation of document, with indication, where appropriate, of the relevant passages | Relevant to claim No. |
|---|---|---|
| X | CN 112783682 A (FUJIAN DUODUOYUN TECHNOLOGY CO., LTD.) 11 May 2021 (2021-05-11) description, paragraphs [0034]-[0118], and figures 1-5 | 1, 7, 13-17 |
| Y | CN 112783682 A (FUJIAN DUODUOYUN TECHNOLOGY CO., LTD.) 11 May 2021 (2021-05-11) description, paragraphs [0034]-[0118], and figures 1-5 | 2-6, 8-12 |
| Y | US 10574700 B1 (SYMANTEC CORP.) 25 February 2020 (2020-02-25) claims 1-20, and figures 1-6 | 2-6, 8-12 |
| A | CN 110674129 A (PING AN TECHNOLOGY (SHENZHEN) CO., LTD.) 10 January 2020 (2020-01-10) entire document | 1-17 |
| A | CN 111581005 A (SHENZHEN SKYWORTH SOFTWARE CO., LTD.) 25 August 2020 (2020-08-25) entire document | 1-17 |

☐ Further documents are listed in the continuation of Box C.　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 December 2023** | **25 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/124802**

| Patent document cited in search report | | | Publication date (day/month/year) | Patent family member(s) | Publication date (day/month/year) |
|---|---|---|---|---|---|
| CN | 112783682 | A | 11 May 2021 | None | |
| US | 10574700 | B1 | 25 February 2020 | None | |
| CN | 110674129 | A | 10 January 2020 | None | |
| CN | 111581005 | A | 25 August 2020 | None | |

Form PCT/ISA/210 (patent family annex) (July 2022)

**EP 4 614 316 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310070418